# EUROPEAN PATENT APPLICATION

(11) **EP 2 006 618 A1**
(43) Date of publication of application: **24.12.2008**
(21) Application number: 07737934.5
(22) Date of filing: 07.03.2007
(51) Int. Cl.: F25B 45/00, F25B 1/00, F25B 1/10, F25B 41/04

(54) **REFRIGERATION DEVICE**

(30) Priority: 27.03.2006 JP 2006084701
(71) Applicant: Daikin Industries, Ltd., Osaka-shi, Osaka 530-8323 (JP)
(72) Inventor: SAKAE, Satoru, Sakai-shi, Osaka 591-8511 (JP); MUKAIDANI, Toshiaki, Sakai-shi, Osaka 591-8511 (JP); ARII, Keiji, Sakai-shi, Osaka 591-8511 (JP)
(74) Representative: HOFFMANN EITLE
(86) International application number: PCT/JP2007/054420
(87) International publication number: WO 2007/111099

(57) **Abstract**

In a refrigeration system including a plurality of indoor units **(3, 4)** and a plurality of booster units **(5, 6),** first service valves **(SV1, SV3)** of first and second circuit blocks are provided on a liquid-carrying line between an outdoor heat exchanger **(77)** and indoor heat exchangers **(54, 56)** and second service valves **(SV2, SV4)** of the first and second circuit blocks are provided at outlets of the booster units **(5, 6),** so that maintenance of the indoor units **(3, 4)** and the booster units **(5, 6)** is performed with more ease without reducing reliability and refrigeration capacity of the refrigeration system.

## Description

### TECHNICAL FIELD

The present invention relates to a refrigeration system having a refrigerant circuit which performs two-stage compression refrigeration cycles. In particular, it relates to a mechanism for collecting a refrigerant.

### BACKGROUND ART

Refrigeration systems having a refrigerant circuit which performs two-stage compression refrigeration cycles have already been known. The refrigeration system includes a heat source-side unit, a utilization-side unit and a booster unit connected by refrigerant pipes. The heat source-side unit has a high-stage compressor and a heat source-side heat exchanger, the utilization-side unit has an expansion mechanism and a utilization-side heat exchanger and the booster unit has a low-stage compressor. In a refrigerant circuit of the refrigeration system, intermediate pressure refrigerant gas sucked into the high-stage compressor is compressed to a predetermined high pressure and discharged from the high-stage compressor. Then, the refrigerant gas is condensed into a high pressure liquid refrigerant as it dissipates heat in the heat source-side heat exchanger. The high pressure liquid refrigerant is depressurized to a predetermined pressure in the expansion mechanism, absorbs heat and evaporates in an evaporator to become a low pressure refrigerant gas. The low pressure refrigerant gas is sucked into the low-stage compressor and compressed to a predetermined intermediate pressure to become intermediate pressure refrigerant gas. The intermediate pressure refrigerant gas is discharged from the low-stage compressor and sucked again into the high-stage compressor. As the refrigerant circulates in the refrigerant circuit in this way, a compression process by the high-stage compressor, a condensation process, an expansion process, an evaporation process, and a compression process by the low-stage compressor are repeated to perform a refrigeration cycle operation. The utilization-side heat exchanger is placed in a chamber. The heat source-side heat exchanger and the utilization-side heat exchanger are used as a condenser and an evaporator, respectively, to cool the air in the chamber.

According to Patent Literature 1, for easy maintenance of a booster unit of a refrigeration system, a refrigerant circuit including service valves provided at the front and back of the booster unit has been proposed. The service valves provided in the refrigerant circuit are configured to bring the booster unit and the refrigerant circuit in or out of communication. In addition, the service valves have refrigerant ports which communicate with the booster unit when valve elements of the service valves are closed. For example, when a low-stage compressor in the booster unit goes out of order, the valve elements are closed to close only the communication between the booster unit and the refrigerant circuit, and then the refrigerant remaining in the booster unit is collected through the refrigerant ports using a refrigerant collector. This allows maintenance of the unit without performing a pump down process, thereby reducing time required for the maintenance. Patent Literature 1: Publication of Japanese Patent Application No. 2005-214494

### DISCLOSURE OF THE INVENTION

### PROBLEM THAT THE INVENTION IS TO SOLVE

One of the service valves of the refrigeration system according to Patent Literature 1 is placed on the suction side of the low-stage compressor. Therefore, even if time required for the maintenance is reduced, reliability or refrigeration capacity of the refrigeration system may be reduced. More specifically, the suction side of the low-stage compressor where the service valve is arranged is often reduced in temperature during the operation of the refrigeration system. When this operation state is kept for a long time, the service valve may possibly be frozen. Suppose that the service valve is frozen with moisture remaining around a screw fixing the service valve, the moisture around the screw is also frozen and expanded. If the service valve is broken due to the expansion of the moisture, the refrigerant gas may leak from the service valve, resulting in reduction of the reliability of the refrigeration system.

The provision of the service valve on the suction side of the low-stage compressor may increase a pressure loss on the suction side due to flow resistance of the valve. The increase of the pressure loss may bring about pressure drop at the suction side of the compressor to decrease the amount of circulating refrigerant. As a result, the refrigeration capacity may be reduced.

When the need of component replacement arises in not the booster unit but the utilization-side unit, a pump down process for collecting the refrigerant remaining in the utilization-side heat exchanger has to be performed to make the utilization-side unit ready for the maintenance. In this way, time required for maintaining the utilization-side unit is not reduced.

With the foregoing in mind, the present invention has been achieved. An object of the invention is to make the maintenance of the refrigeration system easier without reducing the reliability and refrigeration capacity of the refrigeration system by providing the service valves at optimum positions.

### MEANS OF SOLVING THE PROBLEM

According to a first aspect, the present invention is directed to a refrigeration system including: a refrigerant circuit **(12)** which performs two-stage compression refrigeration cycles and in which a heat source-side unit **(2)** including a high-stage compression mechanism **(25)** and a heat source-side heat exchanger **(77)**, a utilization-side unit **(3, 4)** including a utilization-side heat exchanger **(54, 56)** and a booster unit **(5, 6)** having a low-stage compression mechanism **(75, 76)** are sequentially connected; a first service valve **(SV1, SV3)** which is provided near the utilization-side heat exchanger **(54, 56)** and has a refrigerant collection port and a closing mechanism; and a second service valve **(SV2, SV4)** which is provided at an outlet of the booster unit **(5, 6)** and has a refrigerant collection port and a closing mechanism.

The first service valve **(SV1, SV3)** is provided on a liquid-carrying line between the heat source-side heat exchanger **(77)** and the utilization-side heat exchanger **(54, 56)**. An end of the liquid-carrying line is connected to the heat source-side heat exchanger **(77)** in the heat source-side unit **(2)** and the other end thereof is connected to the utilization-side heat exchanger **(54, 56)** in the utilization-side unit **(3, 4)**. That is, the first service valve **(SV1, SV3)** may be provided on a liquid-carrying line in the utilization-side unit **(3, 4)**.

According to the first aspect of the invention, the booster unit **(5, 6)** and the utilization-side unit **(3, 4)** located between the first service valve (**SV1, SV3)** and the second service valve **(SV2, SV4)** are brought into out of communication with the refrigerant circuit **(12)** by closing the first service valve **(SV1, SV3)** and the second service valve **(SV2, SV4)**, while the booster unit **(5, 6)** and the utilization-side unit **(3, 4)** are kept connected to the refrigeration system **(1)**.

According to a second aspect of the invention related to the first aspect, the first service valve **(SV1, SV3)** is provided on a liquid-carrying connecting pipe **(17)** between the heat source-side unit **(2)** and the utilization-side unit **(3, 4)**.

According to the second aspect, in a like manner according to the first aspect, the booster unit **(5, 6)** and the utilization-side unit **(3, 4)** are brought into out of communication with the refrigerant circuit **(12)**, while the booster unit **(5, 6)** and the utilization-side unit **(3, 4)** are kept connected to the refrigeration system **(1)**.

According to a third aspect of the invention related to the first or second aspect, the second service valve **(SV2, SV4)** is provided in the booster unit **(5, 6)**.

According to the third aspect, the second service valve **(SV2, SV4)** is located inside the booster unit **(5, 6)**. Therefore, a refrigerant path between the first and second service valves **(SV1, SV2, SV3, SV4)** is shortened.

According to a fourth aspect of the invention related to the first aspect, the first and second service valves **(SV1, SV2, SV3, SV4)** are provided in the booster unit **(5, 6)**.

According to the fourth aspect, a refrigerant pipe on which the first service valve **(SV1, SV3)** is provided is arranged to pass the inside of the booster unit **(5, 6)**. As a result, the first service valve **(SV1, SV3)** and the second service valve **(SV2, SV4)** are included in the booster unit **(5, 6)**. Therefore, the maintenance of the booster unit **(5, 6)** and the switching of the service valves are performed in close positions.

According to a fifth aspect of the present invention related to any one of the first to fourth aspects, a plurality of the utilization-side units **(3, 4)** are connected in parallel to the heat source-side unit **(2)**, the first service valve **(SV1, SV3)** is provided for each of the utilization-side units **(3, 4)**, a plurality of the booster units **(5, 6)** are connected in parallel to the heat source-side unit **(**2**)** and the second service valve **(SV2, SV4)** is provided for each of the booster units **(5, 6)**.

According to the fifth aspect, in a like manner according to the first aspect, even if a plurality of utilization-side units **(3, 4)** and a plurality of booster units **(5, 6)** are provided, the booster unit **(5, 6)** and the utilization-side unit **(3, 4)** located between the first service valve **(SV1, SV3)** and the second service valve **(SV2, SV4)** at the downstream of the first service valve **(SV1, SV3)** are brought into out of communication with the refrigerant circuit **(12)** by closing the first service valve **(SV1, SV3)** and the second service valve **(SV2, SV4)**, while the booster unit **(5, 6)** and the utilization-side unit **(3, 4)** are kept connected to the refrigeration system **(1)**.

### EFFECT OF THE INVENTION

According to the present invention, the second service valve **(SV2, SV4)** is provided at an outlet of the booster unit **(5, 6)** and the first service valve **(SV1, SV3)** is provided on a liquid-carrying line between the heat source-side heat exchanger **(77)** of the heat source-side unit **(2)** and the utilization-side heat exchanger **(54, 56)** of the utilization-side unit **(3, 4)**. Therefore, the booster unit **(5, 6)** or the utilization-side unit **(3, 4)** is maintained without performing a pump down process and without reducing the reliability and refrigeration capacity of the refrigeration system **(1)**. According to the present invention, when one of the booster unit **(5, 6)** and the utilization-side unit **(3, 4)** goes out of order, a refrigerant remaining in both of the units has to be collected. In this respect, most of the refrigerant in the refrigerant circuit **(12)** presents in the form of a liquid refrigerant in the heat source-side unit **(2)** and the liquid-carrying connecting pipe **(17)**. That is, in view of total maintenance time, there is no great difference between time required for collecting the refrigerant only from the broken unit and time required for collecting the refrigerant from both of the broken unit and the properly working unit. Accordingly, the booster unit **(5, 6)** or the utilization-side unit **(3, 4)** is maintained without extremely increasing the maintenance time. Since the first service valve **(SV1, SV3)** is provided not on the suction side of the low-stage compression mechanism **(75, 76)** but on the discharge side of the high-stage compression mechanism **(25)**, the valve is little affected by freezing during the refrigeration operation. Further, the reduction in refrigeration capacity due to flow resistance of the valve is negligible.

According to the second aspect of the invention, in a like manner according to the first aspect, even when the first service valve **(SV1, SV3)** is provided on the liquid-carrying connecting pipe **(17)**, the booster unit **(5, 6)** or the utilization-side unit **(3, 4)** is maintained without performing a pump down process and without reducing the reliability and refrigeration capacity of the refrigeration system **(1)**. Further, the first service valve **(SV1**, **SV3)** is provided outside the utilization-side unit **(3,** 4**)**. Therefore, for example, the operation of the first service valve **(SV1, SV3)** before the maintenance of the booster unit is performed outside the utilization-side unit **(3, 4)**.

According to the third aspect of the invention, the refrigerant path between the first service valve **(SV1, SV3)** and the second service valve **(SV2, SV4**) is shortened. Therefore, the amount of the refrigerant present between these service valves is reduced. As the refrigerant amount is reduced, time required for collecting the refrigerant before the maintenance of the utilization-side unit **(3, 4)** or the booster unit **(5, 6)** is reduced.

According to the fourth aspect of the invention, the component replacement for the maintenance of the booster unit **(5, 6)** and the switching of the service valves are performed in close positions. Therefore, travel time during the both operations is reduced, which allows smooth maintenance of the booster unit **(5, 6)**.

According to the fifth aspect of the invention, the booster unit **(5, 6)** and the utilization-side unit **(3, 4)** out of communication with the refrigerant circuit **(12)** of the refrigeration system **(1)** exist simultaneously with the booster unit **(5, 6)** and the utilization-side unit **(3, 4)** in communication with the refrigerant circuit **(12)**. Therefore, the booster unit **(5, 6)** and the utilization-side unit **(3, 4)** out of communication with the refrigerant circuit **(12)** are maintained on the one hand, while the booster unit **(5, 6)** and the utilization-side unit **(3, 4)** in communication with the refrigerant circuit **(12)** are kept running for the cooling operation on the other hand. Thus, even if one of the booster unit **(5, 6)** and the utilization-side unit **(3, 4)** goes out of order, the refrigeration operation is continued without the need of stopping the refrigeration system.

### BRIEF DESCRIPTION OF DRAWINGS

[FIG. 1]

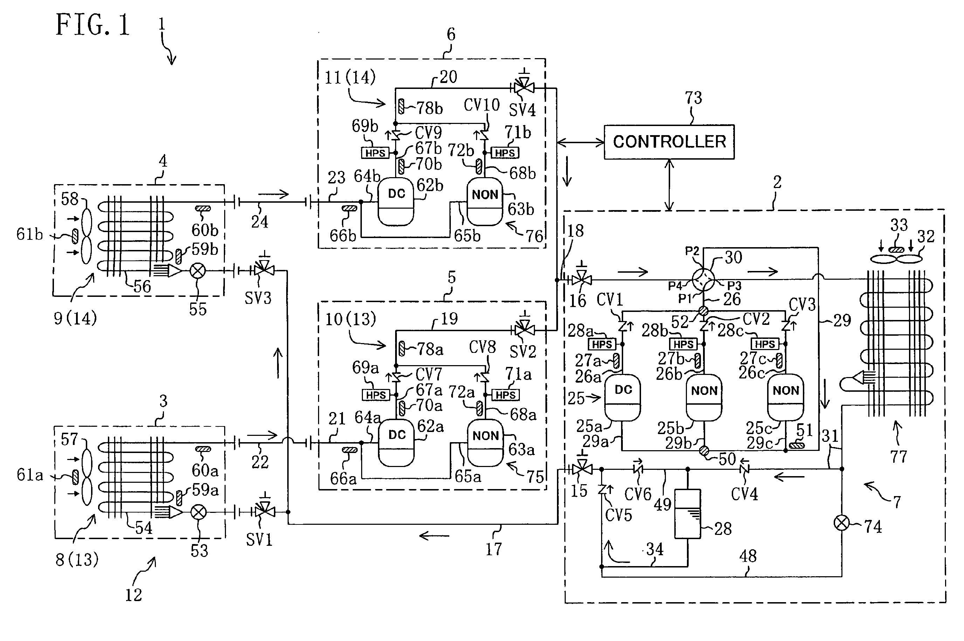

   FIG. **1** is a refrigerant circuit diagram of a refrigeration system according to an embodiment of the present invention.
[FIG. 2]

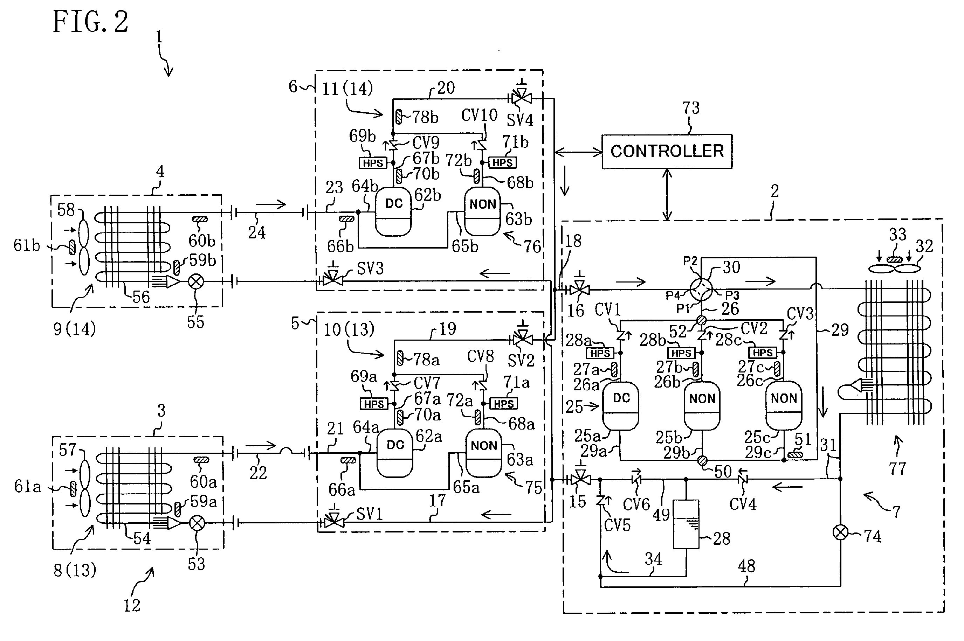

   FIG. **2** is a refrigerant circuit diagram of a refrigeration system according to a modified embodiment of the present invention.

### EXPLANATION OF REFERENCE NUMERALS

- 1: Refrigeration system
- 2: Outdoor unit (heat source-side unit)
- 3: First indoor unit (first utilization-side unit)
- 4: Second indoor unit (second utilization-side unit)
- 5: First booster unit
- 6: Second booster unit
- 12: Refrigerant circuit
- 13: First circuit block
- 14: Second circuit block
- 17: High pressure liquid connecting pipe (liquid-carrying connecting pipe)
- 54: First indoor heat exchanger (first utilization-side heat exchanger)
- 56: Second indoor heat exchanger (second utilization-side heat exchanger)
- 75: First low-stage compression mechanism (low-stage compression mechanism)
- 76: Second low-stage compression mechanism (low-stage compression mechanism)
- 77: Outdoor heat exchanger (heat source-side heat exchanger)
- SV1: First circuit block's first service valve (first service valve)
- SV2: First circuit block's second service valve (second service valve)
- SV3: Second circuit block's first service valve (first service valve)
- SV4: Second circuit block's second service valve (second service valve)

### BEST MODE FOR CARRYING OUT THE INVENTION

Hereinafter, an embodiment of the present invention is described with reference to the drawings.

An embodiment shown in FIG. **1** is directed to a refrigeration system **(1)** which performs a cooling operation in two refrigeration chambers.

The refrigeration system **(1)** includes an outdoor unit (heat source-side unit**) (2)** placed outside a refrigeration chamber and a first indoor unit (first utilization-side unit) **(**3**)**, a second indoor unit (second utilization-side unit) **(4)**, a first booster unit **(5)** and a second booster unit **(6)** placed inside the refrigeration chamber.

The outdoor unit **(2)** includes an outdoor circuit **(7)** having a high-stage compression mechanism **(25)** and an outdoor heat exchanger (heat source-side heat exchanger) (**77)**. The first indoor unit **(3)** includes a first refrigeration circuit **(8)** having a first indoor heat exchanger (first utilization-side heat exchanger) **(54)**. The second indoor unit **(4)** includes a second refrigeration circuit **(9)** having a second indoor heat exchanger **(**second utilization-side heat exchanger) **(56)**. The first booster unit **(5)** and the second booster unit **(6)** include a first booster circuit **(10)** and a second booster circuit **(11)**, respectively.

In the refrigeration system **(1)**, a refrigerant circuit **(12)** which performs vapor compression refrigeration cycles is provided by connecting the circuits **(7, 8, 9, 10, 11)** with pipes. The first refrigeration circuit **(8)** and the first booster circuit **(10)** are connected in series to provide a first circuit block **(13)**. A first circuit block's first service valve (first service valve**) (SV1)** is arranged at the front of the first circuit block **(13)** and a first circuit block's second service valve (second service valve**) (SV2)** is arranged at the back of the first circuit block **(13)**. In a like manner, the second refrigeration circuit **(9)** and the second booster circuit **(11)** are connected in series to provide a second circuit block **(14)**. A second circuit block's first service valve **(SV3)** and a second circuit block's second service valve **(SV4)** are arranged at the front and the back of the second circuit block **(14)**, respectively. Each of the first service valves **(SV1**, **SV3)** is provided on a liquid-carrying line between the heat source-side heat exchanger **(77)** and the utilization-side heat exchanger **(54, 56)**. The first circuit block **(13)** and the second circuit block **(14**) are connected in parallel to the outdoor circuit **(7)**.

A first stop valve **(15)** and a second stop valve **(16)** are provided at a liquid port and a gas port of the outdoor circuit **(7)**, respectively. To the first stop valve **(15)**, an end of a high pressure liquid-carrying connecting pipe **(**liquid-carrying connecting pipe**) (17)** is connected. The other end of the high pressure liquid-carrying connecting pipe **(17)** is branched in two, one of which being connected to a liquid port of the first refrigeration circuit **(8)** through the first circuit block's first service valve **(SV1)** and the other being connected to a liquid port of the second refrigeration circuit **(9)** through the second circuit block's first service valve **(SV3).** To the second stop valve **(16),** an end of an intermediate pressure gas-carrying connecting pipe **(18)** is connected. The other end of the intermediate pressure gas-carrying connecting pipe **(18)** is branched in two, one of which being connected to a first booster discharge/merge pipe **(19)** of the first booster circuit **(10)** through the first circuit block's second service valve (SV2), the other being connected to a second booster discharge/merge pipe **(20)** of the second booster circuit **(11)** through the second circuit block's second service valve **(SV4).**

A first low pressure gas-carrying connecting pipe **(22)** is connected to a gas port of the first refrigeration circuit **(8)** and a first booster suction/merge pipe **(21)** is connected to the first low pressure gas-carrying connecting pipe **(22).** A second low pressure gas-carrying connecting pipe **(24)** is connected to a gas port of the second refrigeration circuit **(9)** and a second booster suction/merge pipe **(23)** is connected to the second low pressure gas-carrying connecting pipe **(24).**

Each of the service valves **(SV1, SV2, SV3, SV4)** has a valve element, pipe openings provided at both sides of the valve element and a refrigerant port provided between any one of the pipe openings and the valve element. Opening and closing the valve element brings the pipe openings in or out of communication. The refrigerant port has a check valve at the end thereof. The check valve is configured to allow a refrigerant flow to the inside of the refrigerant system from outside and prevent the refrigerant flow from running in the reverse direction.

### (Outdoor unit)

The outdoor unit **(2)** includes the outdoor circuit **(7)** as described above. The outdoor circuit **(7)** is provided with a high-stage compression mechanism **(25),** a four-way selector valve **(30),** an outdoor heat exchanger **(77),** a receiver **(28)** and an outdoor expansion valve **(74).**

The high-stage compression mechanism **(25)** includes a capacity variable high-stage compressor **(25a),** a first capacity invariable high-stage compressor **(25b)** and a second capacity invariable high-stage compressor **(25c)** connected in parallel. To the capacity variable high-stage compressor **(25a),** power is supplied through an inverter. Changing the output frequency of the inverter varies the rotation speed of a motor of the compressor, thereby varying the compressor capacity. In the first and second capacity invariable high-stage compressors **(25b, 25c),** motors are operated at a constant rotation speed so that their capacities are unchanged.

A first discharge/branch pipe **(26a)** is connected to the discharge side of the capacity variable high-stage compressor **(25a).** A second discharge/branch pipe **(26b)** is connected to the discharge side of a first capacity invariable high-stage compressor **(25b).** A third discharge/branch pipe **(26c)** is connected to the discharge side of the second capacity invariable high-stage compressor **(25c).** The first discharge/branch pipe **(26a)** is provided with a discharge pipe temperature sensor **(27a),** a high pressure switch **(28a)** and a check valve **(CV1).** The second discharge/branch pipe **(26b)** is provided with a discharge pipe temperature sensor **(27b),** a high pressure switch **(28b)** and a check valve **(CV2).** The third discharge/branch pipe **(26c)** is provided with a discharge pipe temperature sensor **(27c),** a high pressure switch **(28c)** and a check valve **(CV3).** The other ends of these discharge/branch pipes **(26a, 26b, 26c)** are connected to a discharge/merge pipe **(26).** The discharge/merge pipe **(26)** is provided with a discharge pressure sensor **(52).** Each of the check valves **(CV1, CV2, CV3)** is configured to allow the refrigerant flow from the compressor **(25a, 25b, 25c)** to the discharge/merge pipe **(26)** and prevent the refrigerant flow from running in the reverse direction.

An end of a first suction/branch pipe **(29a)** is connected to the suction side of the capacity variable high-stage compressor **(25a).** An end of a second suction/branch pipe **(29b)** is connected to the suction side of the first capacity invariable high-stage compressor **(25b).** An end of a third suction/branch pipe **(29c)** is connected to the suction side of the second capacity invariable high-stage compressor **(25c).** The other ends of these suction/branch pipes **(29a, 29b, 29c)** are connected to a suction/merge pipe **(29).** The suction/merge pipe **(29)** is provided with a suction pressure sensor **(50)** and a suction pipe temperature sensor **(51).**

The outdoor heat exchanger **(77)** is a cross-fin type fin-and-tube heat exchanger. An end of the outdoor heat exchanger **(77)** is connected to the four way selector valve **(30).** The other end of the outdoor heat exchanger **(77)** is connected to the top of the receiver **(28)** through a first liquid pipe **(31).** An outdoor fan **(32)** and an outdoor air temperature sensor **(33)** are provided near the outdoor heat exchanger **(77).**

The receiver **(28)** is connected to the first stop valve **(15)** through a second liquid pipe **(34).** A first branch pipe **(48)** and a second branch pipe **(49)** bypassing the receiver **(28)** are connected between the first liquid pipe **(31)** and the second liquid pipe **(34).** The first branch pipe **(48)** is provided with the outdoor expansion valve **(74).** The outdoor expansion valve **(74)** is an electronic expansion valve capable of adjusting the degree of opening.

A check valve **(CV4)** which allows only the refrigerant flow toward the receiver **(28)** is provided on the first liquid pipe **(31)** between the junction with the first branch pipe **(48)** and the junction with the second branch pipe **(49).** Further, a check valve **(CV5)** which allows only the refrigerant flow toward the first stop valve **(15)** is provided on the second liquid pipe **(34).** A check valve **(CV6)** which allows only the refrigerant flow toward the receiver **(28)** is provided on the second branch pipe **(49).**

The four way selector valve **(30)** is configured so that a first port **(P1)** is connected to the discharge/merge pipe **(26),** a second port **(P2)** is connected to the suction/merge pipe **(29),** a third port **(P3)** is connected to the outdoor heat exchanger **(77)** and a fourth port **(P4)** is connected to the second stop valve **(16).** The four way selector valve **(30)** is switchable between a first state where the first port **(P1)** and the third port **(P3)** communicate with each other and the second port **(P2)** and the fourth port **(P4)** communicate with each other (the state depicted by a solid line in FIG. 1) and a second state where the first port **(P1)** and the fourth port **(P4)** communicate with each other and the second port **(P2)** and the third port **(P3)** communicate with each other (the state depicted by a broken line in FIG. **1****).**

### (Indoor unit)

First and second indoor units **(3, 4)** are configured in the same manner. A first refrigeration circuit **(8)** of the first indoor unit **(3)** includes a first expansion valve **(53)** and a first indoor heat exchanger **(54).** A second refrigeration circuit **(9)** of the second indoor unit **(4)** includes a second expansion valve **(55)** and a second indoor heat exchanger **(56).**

The first and second expansion valves **(53, 55)** are electronic expansion valves capable of adjusting their degrees of opening. The first indoor heat exchanger **(54)** and the second indoor heat exchanger **(56)** are cross-fin type fin-and-tube heat exchangers. In each of the heat exchangers **(54, 56),** though not shown, a plurality of heat exchanger pipes are arranged, to which branched ends of the refrigerant pipe are connected, respectively. First and second indoor fans **(57, 58)** are provided near the first and second indoor heat exchangers **(54, 56),** respectively. In the first indoor heat exchanger **(54),** heat exchange is performed between indoor air blown through the first indoor fan **(57)** and the refrigerant flowing in the heat exchanger pipes. In a like manner, in the second indoor heat exchanger **(56),** heat exchange is performed between indoor air blown through the second indoor fan **(58)** and the refrigerant flowing in the heat exchanger pipes.

The first and second refrigeration circuits **(8, 9)** are provided with three temperature sensors, respectively. More specifically, liquid temperature sensors **(59a, 59b)** are provided at the inlets of the first and second indoor heat exchangers **(54, 56),** respectively, and gas temperature sensors **(60a, 60b)** are provided at the outlets of the first and second indoor heat exchangers **(54, 56),** respectively. Further, indoor temperature sensors **(61a, 61b)** are provided near the first and second indoor fans **(57, 58),** respectively.

### (Booster unit)

The first and second booster units **(5, 6)** are configured in the same manner. As described above, the first and second booster circuits **(10, 11)** of the first and second booster units **(5, 6)** are connected to the gas ports of the first and second refrigeration circuits **(8, 9)** through the first and second low pressure gas-carrying connecting pipes **(22, 24),** respectively.

The first and second booster circuits **(10, 11)** are provided with first and second low-stage compression mechanisms (low-stage compression mechanisms) **(75, 76),** respectively. The first low-stage compression mechanism **(75)** includes a first capacity variable low-stage compressor **(62a)** and a first capacity invariable low-stage compressor **(63a)** connected in parallel. The second low-stage compression mechanism **(76)** includes a second capacity variable low-stage compressor **(62b)** and a second capacity invariable low-stage compressor **(63b)** connected in parallel. To each of the first and second capacity variable low-stage compressors **(62a, 62b),** power is supplied through an inverter. Changing the output frequency of the inverter varies the rotation speeds of motors of the compressors, thereby varying the capacities of the compressors. In the first and second capacity invariable low-stage compressors **(63a, 63b),** motors are operated at a constant rotation speed so that their capacities are unchanged.

The ends of first and second suction pipes **(64a, 64b)** are connected to the suction sides of the first and second capacity variable low-stage compressors **(62a, 62b),** respectively. The ends of third and fourth suction pipes **(65a, 65b)** are connected to the suction sides of the first and second capacity invariable low-stage compressors **(63a, 63b),** respectively. The other ends of the first and third suction pipes **(64a, 65a)** are connected to the first booster suction/merge pipe **(21).** The other ends of the second and fourth suction pipes **(64b, 65b)** are connected to the second booster suction/merge pipe **(23).**

The ends of first and second discharge pipes **(67a, 67b)** are connected to the discharge sides of the first and second capacity variable low-stage compressors **(62a, 62b),** respectively. The ends of third and fourth discharge pipes **(68a, 68b)** are connected to the discharge sides of the first and second capacity invariable low-stage compressors **(63a, 63b),** respectively. The other ends of the first and third discharge pipes **(67a, 68a)** are connected to the first booster discharge/merge pipe **(19).** The other ends of the second and fourth discharge pipes **(67b, 68b)** are connected to the second booster discharge/merge pipe **(20).**

In the first and second booster circuits **(10, 11),** various sensors and pressure switches are arranged. More specifically, suction pipe temperature sensors **(66a, 66b)** are provided on the first and second booster suction/merge pipes **(21, 23),** respectively. High pressure switches **(69a, 69b)** and discharge pipe temperature sensors **(70a, 70b)** are provided on the first and second discharge pipes **(67a, 67b),** respectively. High pressure switches **(71a, 71b)** and discharge pipe temperature sensors **(72a, 72b)** are provided on the third and fourth discharge pipes **(68a, 68b),** respectively. Further, discharge/merge pipe temperature sensors **(78a, 78b)** are provided on the first and second booster discharge/merge pipes **(19, 20),** respectively.

Further, the first and second booster circuits **(10, 11)** include a plurality of check valves. More specifically, check valves **(CV7, CV9)** are provided on the first and second discharge pipes **(67a, 67b),** respectively, and check valves **(CV8, CV10)** are provided on the third and fourth discharge pipes **(68a, 68b),** respectively.

The check valves **(CV7, CV8, CV9, CV10)** are configured to allow the refrigerant flow from the compressors **(62a, 62b, 636a, 63b)** to the booster discharge/merge pipes **(19, 20)** and prevent the refrigerant flow from running in the reverse direction.

### (Controller)

A controller **(73)** controls the high-stage compression mechanism **(25),** the first and second low-stage compression mechanisms **(75, 76),** the four way selector valve **(30),** the first and second expansion valves **(53, 55),** the outdoor fan **(32)** and the first and second indoor fans **(57, 58)** based on the outputs of the temperature sensors, the pressure sensors and the pressure switches provided in the refrigeration system **(1).**

### -Operation-

### (Cooling operation)

In the cooling operation of the refrigeration system (1), the refrigeration chamber is cooled by the first indoor unit **(3)** and the second indoor unit **(4).**

For the cooling operation, the four way selector valve **(30)** in the outdoor circuit (7) enters the state where the first port **(P1)** and the third port **(P3)** communicate with each other and the second port **(P2)** and the fourth port **(P4)** are communicate with each other and the outdoor expansion valve **(74)** is fully opened. In the first and second refrigeration circuits **(8, 9),** the degrees of opening of the first and second expansion valves **(53, 55)** are adjusted as required. In the cooling operation, the number of compressors **(25a, 25b, 25c)** working in the outdoor unit **(2)** is controlled in response to a refrigeration load. To begin with, the controller **(73)** selects the capacity variable high-stage compressor **(25a)** as the first compressor to start and activates it at the minimum frequency. The frequency of the capacity variable high-stage compressor **(25a)** is varied in response to the refrigeration load. When the cooling capacity of only the capacity variable high-stage compressor **(25a)** is less than a desired capacity, the first capacity invariable high-stage compressor **(25b)** is started. At this time, the frequency of the capacity variable high-stage compressor **(25a)** is once set to the minimum, and then varied again in response to the refrigeration load. When the cooling capacity is still insufficient, the second capacity invariable high-stage compressor **(25c)** is started, while the frequency of the capacity variable high-stage compressor **(25a)** is once set to the minimum, and then varied again in response to the refrigeration load. In this way, the compressors **(25a, 25b, 25c)** are operated. The number control effected in the heat source-side unit **(2)** is imposed in the same manner on the compressors **(62a, 63a)** in the first booster unit **(5)** and the compressors **(62b, 63b)** in the second booster unit **(6)**. In the refrigerant circuit **(12),** the outdoor heat exchanger **(77)** functions as a condenser and the first and second indoor heat exchangers **(54, 56)** function as evaporators to perform refrigeration cycles in the direction indicated by solid arrows.

More specifically, intermediate pressure refrigerant gas flows sucked into the compressors **(25a, 25b, 25c)** of the outdoor unit **(2),** respectively, are compressed into refrigerant gas flows of a predetermined high pressure and pass through the check valves **(CV1, CV2, CV3)** of the discharge/merge pipes **(26a, 26b, 26c).** The check valves **(CV1, CV2, CV3)** function to prevent backflow of the refrigerant gas from the working compressors **(25a, 25b, 25c)** to the discharge/branch pipes **(26a, 26b, 26c)** of the compressors **(25a, 25b, 25c)** suspended in response to a certain refrigeration load. The high pressure refrigerant gas flows meet in the discharge/merge pipe **(26)** without flowing back to the other compressors **(25a, 25b, 25c)** and flow into the outdoor heat exchanger **(77)** through the four way selector valve **(30).**

In the outdoor heat exchanger **(77),** the high pressure refrigerant gas is condensed as it dissipates heat into the outside air. The high pressure liquid refrigerant condensed in the outdoor heat exchanger **(77)** flows into the receiver **(28)** through the first liquid pipe **(31).** When the amount of the refrigerant contained in the outdoor heat exchanger (77) and the first and second indoor heat exchangers **(54, 56)** is increased or decreased due to the change in operation state or refrigeration load, the high pressure liquid refrigerant is temporarily trapped in the receiver **(28)** and discharged out of the receiver **(28)** to accommodate the increase or decrease of the refrigerant. The high pressure liquid refrigerant discharged out of the receiver **(28)** flows into the high pressure liquid-carrying connecting pipe **(17)** and distributed to the first and second circuit blocks **(13, 14).** The high pressure liquid refrigerant distributed to the first circuit block **(13)** flows into the first expansion valve **(53)** through the first circuit block's first service valve **(SV1).** The high pressure liquid refrigerant distributed to the second circuit block **(14)** flows into the second expansion valve **(55)** through the second circuit block's first service valve **(SV3).**

The high pressure liquid refrigerant flowed into the first expansion valve **(53)** is depressurized as it passes through the first expansion valve **(53)** to become a low pressure refrigerant and flows into the first indoor heat exchanger **(54).** The low pressure refrigerant flowed into the first indoor heat exchanger **(54)** absorbs heat of the indoor air and evaporates to become low pressure refrigerant gas. The indoor air is cooled by the heat absorption. The low pressure refrigerant gas flows into the first booster circuit **(10)** through the first low pressure gas-carrying connecting pipe **(22).**

The high pressure liquid refrigerant flowed into the second expansion valve **(55)** is also depressurized as it passes through the second expansion valve **(55)** to become a low pressure refrigerant and flows into the second indoor heat exchanger **(56).** The low pressure refrigerant flowed into the second indoor heat exchanger **(56)** absorbs heat of the indoor air and evaporates to become low pressure refrigerant gas. The indoor air is cooled by the heat absorption. The low pressure refrigerant gas flows into the second booster circuit **(11)** through the second low pressure gas-carrying connecting pipe **(24).**

The low pressure refrigerant gas flowed into the first booster circuit **(10)** passes through the first booster suction/merge pipe **(21)** and divided to flow into the first suction pipe **(64a)** and the third suction pipe **(65a).** The refrigerant flowed into the first suction pipe **(64a)** is sucked into the first capacity variable low-stage compressor **(62a),** while the refrigerant flowed into the third suction pipe **(65a)** is sucked into the first capacity invariable low-stage compressor **(63a).** The low pressure refrigerant gas flows sucked into the low-stage compressors **(62a, 63a),** respectively, are compressed to a predetermined intermediate pressure to become intermediate pressure refrigerant gas flows, which are then discharged to the discharge pipes **(67a, 68a),** respectively. The discharged intermediate pressure refrigerant gas flows meet in the first booster discharge/merge pipe **(19)** and flow out of the first booster circuit **(10)** through the first circuit block's second service valve **(SV2).**

The low pressure refrigerant gas flowed into the second booster circuit **(11)** is also compressed to a predetermined intermediate pressure in the low-stage compressors **(62b, 63b)** to become intermediate pressure refrigerant gas in the same manner as in the first booster circuit **(10),** and then flows out of the second booster circuit **(11)** through the second circuit block's second service valve **(SV4).**

The intermediate pressure refrigerant gas flows discharged out of the first and second booster circuits **(10, 11)** meet in the intermediate pressure gas-carrying connecting pipe **(18)** and flow into the outdoor circuit **(7).** The refrigerant flowed into the outdoor circuit **(7)** flows into the suction/merge pipe **(29)** through the four way selector valve **(30)** and is sucked into the capacity variable high-stage compressor **(25a)** and the first and second capacity invariable high-stage compressors **(25b, 25c).**

The refrigerant is repeatedly circulated in the above-described manner. In this way, the indoor air in the refrigeration chamber is cooled by the refrigeration system **(1).**

### (Maintenance)

Maintenance to be done when the first booster unit **(5)** or the first indoor unit **(3)** of the first circuit block **(13)** goes out of order and component replacement is required is described below. The need of component replacement arises, for example, when the first capacity variable low-stage compressor **(62a)** and the first capacity invariable low-stage compressor **(63a)** do not work correctly, when gas leakage occurs in the first indoor heat exchanger **(54)** and when the first expansion valve **(53)** does not work correctly. The following maintenance is performed in the same manner when the unit of the second circuit block **(14)** goes out of order and component replacement is required.

In order to replace a refrigerant circuit component, in general, a pump down process is performed to collect the refrigerant remaining in the refrigerant circuit **(12)** into the outdoor unit **(2).** In the present embodiment, however, the pump down process is not performed. First, the first circuit block's first service valve **(SV1)** and the first circuit block's second service valve **(SV2)** in the first circuit block **(13)** are closed. Accordingly, the inlet and the outlet of the first circuit block **(13)** are closed, i.e., the first circuit block **(13)** is out of communication with the refrigerant circuit **(12),** and at the same time, the first circuit block **(13)** is in communication with the refrigerant ports of the first circuit block's first service valve **(SV1)** and the first circuit block's second service valve **(SV2).** Since the refrigerant ports have the check valves, the refrigerant in the first circuit block **(13)** does not blow outside. Further, since the second circuit block **(14)** is in communication with the refrigerant circuit **(12),** the second circuit block **(14)** is able to perform the cooling operation.

Then, the refrigerant ports of the first circuit block's first service valve **(SV1)** and the first circuit block's second service valve **(SV2)** and a refrigerant collector are connected via a refrigerant hose to collect the refrigerant in the first circuit block **(13).** Since the refrigerant ports have the check valves, a refrigerant hose configured to press the valve elements of the check valves inside is used. After the refrigerant collection, a check is performed to see that the pressure in the first circuit block **(13)** is atmospheric pressure and then the refrigerant collector is detached from the refrigerant hose. Thereafter, the broken refrigerant circuit component is replaced. After the component replacement, a vacuum pump is connected to the refrigerant ports of the first circuit block's first service valve **(SV1)** and the first circuit block's second service valve **(SV2)** via a refrigerant hose to evacuate the first circuit block **(13).** After the refrigerant hose is connected, the vacuum pump is activated to evacuate the first circuit block **(13).** After the evacuation, the vacuum pump is detached from the refrigerant ports and the same amount of the refrigerant as the collected refrigerant is injected through the refrigerant port of the first circuit block's first service valve **(SV1)** or the first circuit block's second service valve **(SV2).** After the injection of the refrigerant, the first circuit block's first service valve **(SV1)** and the first circuit block's second service valve **(SV2)** are opened. Thus, the maintenance is finished.

When the first booster unit **(5)** or the first indoor unit **(3)** goes out of order and component replacement is required, one or both of the first circuit block's first service valve **(SV1)** and the first circuit block's second service valve **(SV2)** may be used for the maintenance.

### -Effect of Embodiment-

According to the present embodiment, when the first booster unit **(5)** and the first indoor unit **(3)** of the first circuit block **(13)** go out of order, the first circuit block's first service valve **(SV1)** and the first circuit block's second service valve **(SV2)** are closed. When the second booster unit **(6)** and the second indoor unit **(4)** of the second circuit block **(14)** go out of order, the second circuit block's first service valve **(SV3)** and the second circuit block's second service valve **(SV4)** are closed. In this way, maintenance of the out-of-order unit is done without performing the pump down process. Since the first service valves **(SV1, SV3)** of the first and second circuit blocks are provided on the high pressure liquid-carrying connecting pipe **(17),** there is little possibility of break of the valves due to freezing and increase in pressure loss due to flow resistances of the service valves.

When one of the first and second circuit blocks **(13)** and **(14)** goes out of order, maintenance is done to a circuit block including the out-of-order unit, while the other circuit block keeps performing the cooling operation.

### -Modified Embodiment-

As a modified embodiment, the refrigerant circuit **(12)** of the refrigeration system **(1)** may be configured as shown in FIG. 2. More specifically, the shape or route of the high pressure liquid-carrying connecting pipe **(17)** is changed so that the first circuit block's first service valve **(SV1)** is contained in the first booster unit **(5)** and the second circuit block's first service valve **(SV3)** is contained in the second booster unit **(6).** With this configuration, when the component replacement is performed in the booster unit **(5, 6),** the component replacement and the open/close operation of the first and service valves are performed in close positions. This allows smooth component replacement.

Different from the arrangement according to the modified embodiment, the first service valve **(SV1, SV3)** may be provided on a liquid-carrying line in the indoor unit **(3, 4).** With this configuration, when the component in the indoor unit **(3, 4)** is replaced, the component replacement and the open/close operation of the first service valve are performed in close positions. This allows smooth maintenance.

### ((Other Embodiments))

The above-described embodiment may be configured as follows.

The structure of the refrigerant circuit **(12)** according to the present embodiment is not particularly limited. For example, the refrigerant circuit may include three or more circuit blocks **(13, 14)** each including a booster circuit **(10, 11)** and a refrigeration circuit **(8, 9).**

The above embodiments are merely preferred embodiments in nature and are not intended to limit the scope, applications and use of the invention.

### INDUSTRIAL APPLICABILITY

As described above, the present invention is useful for a refrigeration system having a refrigerant circuit which performs two-stage compression refrigeration cycles.

## Claims

1. A refrigeration system comprising: a refrigerant circuit **(12)** which performs two-stage compression refrigeration cycles and in which a heat source-side unit **(2)** including a high-stage compression mechanism **(25)** and a heat source-side heat exchanger **(77),** a utilization-side unit **(3, 4)** including a utilization-side heat exchanger **(54, 56)** and a booster unit **(5, 6)** having a low-stage compression mechanism **(75, 76)** are sequentially connected;
a first service valve **(SV1, SV3)** which is provided near the utilization-side heat exchanger **(54, 56)** and has a refrigerant collection port and a closing mechanism; and
a second service valve **(SV2, SV4)** which is provided at an outlet of the booster unit **(5, 6)** and has a refrigerant collection port and a closing mechanism, wherein
the first service valve **(SV1, SV3)** is provided on a liquid-carrying line between the heat source-side heat exchanger **(77)** and the utilization-side heat exchanger **(54, 56).**

2. The refrigeration system of Claim 1, wherein
the first service valve **(SV1, SV3)** is provided on a liquid-carrying connecting pipe **(17)** between the heat source-side unit **(2)** and the utilization-side unit **(3, 4).**

3. The refrigeration system of Claim 1, wherein
the second service valve **(SV2, SV4)** is provided in the booster unit **(5, 6).**

4. The refrigeration system of Claim 1, wherein
the first and second service valves **(SV1, SV2, SV3, SV4)** are provided in the booster unit **(5, 6).**

5. The refrigeration system of Claim 1, wherein
a plurality of the utilization-side units **(3, 4)** are connected in parallel to the heat source-side unit **(2),** the first service valve **(SV1, SV3)** is provided for each of the utilization-side units **(3, 4),** a plurality of the booster units **(5, 6)** are connected in parallel to the heat source-side unit (2) and the second service valve **(SV2, SV4)** is provided for each of the booster units **(5, 6).**
